# EUROPÄISCHE PATENTSCHRIFT

(11) **EP 3 797 588 B1**
(45) Veröffentlichungstag und Bekanntmachung des Hinweises auf die Patenterteilung: **27.08.2025**
(21) Anmeldenummer: 20209149.2
(22) Anmeldetag: 05.01.2016
(51) Int. Cl.: A01M 7/00

(54) **VERFAHREN ZUR BEWEGUNGSSTEUERUNG UND/ODER REGELUNG EINER LANDWIRTSCHAFTLICHEN VERTEILVORRICHTUNG**
METHOD FOR MOTION CONTROL, AND/OR REGULATION OF AN AGRICULTURAL DISTRIBUTION DEVICE
PROCÉDÉ DE COMMANDE ET/OU DE RÉGLAGE DE MOUVEMENT D'UN DISPOSITIF D'ÉPANDAGE AGRICOLE

(30) Priorität: 20.02.2015 DE 102015102422
(43) Veröffentlichungstag der Anmeldung: 31.03.2021
(62) Teilanmeldung aus: 16150186.1
(73) Patentinhaber: HORSCH LEEB Application Systems GmbH, 94405 Landau an der Isar (DE)
(72) Erfinder: Leeb, Theodor, 94405 Landau an der Isar (DE)
(74) Vertreter: v. Bezold & Partner Patentanwälte - PartG mbB

(56) Entgegenhaltungen:
- EP-A1- 2 186 405
- WO-A1-2015/025015
- FR-A1- 2 690 811
- FR-A1- 2 965 454

## Beschreibung

Die vorliegende Erfindung betrifft ein Verfahren zur Bewegungssteuerung und/oder Regelung einer an einer landwirtschaftlichen Verteilmaschine angebrachten Verteilvorrichtung zum Ausbringen von flüssigen und/oder festen Wirkstoffen mit den Merkmalen des unabhängigen Anspruchs 1.

Feldspritzen und an Arbeitsmaschinen wie Traktoren angehängte Verteilvorrichtungen oder Spritzgestänge weisen teilweise sehr große Arbeitsbreiten von zwanzig Metern und mehr auf. Für Transportfahrten werden solch breite Spritzgestänge gefaltet und eingeklappt. Auf dem Acker befinden sich beidseitig der Arbeitsmaschine symmetrische Ausleger von mehreren Metern Länge, die je nach Oberflächenbeschaffenheit und Ackerrelief einen veränderlichen Abstand vom Boden haben. Da die an den Auslegern angeordneten und nach unten gerichteten Düsen zur Ausbringung des Spritzmittels jeweils einen definierten Spritzkegel aufweisen, ergibt sich aus einer veränderlichen Distanz der Düsen zum Boden eine ungleichmäßige Bedeckung des Ackers mit Spritzmittel. Auch steigt die Gefahr der Abdrift des Spritzmittels mit zunehmender Distanz der Spritzdüsen vom Boden stark an, da die zielgerichtete Verteilung fein verstäubter Tropfen bereits von geringen Luftbewegungen negativ beeinflusst wird. Aus diesem Grund besteht bei zunehmenden Auslegerdimensionen und der damit einhergehenden Arbeitsbreite die Notwendigkeit, das Spritzgestänge in möglichst gleichbleibendem Abstand zum Boden zu führen, sowie das Spritzgestänge dem Bodenrelief bzw. einer Bodenkontur nachzuführen, da bereits geringe Schrägstellungen des Spritzgestänges zu großen Abstandsdifferenzen der Düsen zum Boden führen.

Ein Verfahren zur Bewegungssteuerung oder Regelung eines Spritzgestänges ist aus dem Stand der Technik bereits bekannt. So wird in der EP 2 591 657 A1 eine fahrbare Vorrichtung zum Ausbringen von flüssigen und/oder festen Wirkstoffen beschrieben, die ein Ausbringgestänge umfasst, welches aus einem Mittelteil und seitlichen Auslegearmen besteht und an einem Aufhängepunkt schwenkbar gelagert ist. Zur Bewegungssteuerung ist das Mittelteil über wenigstens eine regelbare Stelleinrichtung mit einem Rahmenabschnitt gekoppelt. Die Stelleinrichtung stellt in einem ersten Betriebsmodus, in dem das Ausbringgestänge weitestgehend von Drehmomenten um die Schwenkachse durch den Aufhängepunkt, resultierend aus Fahrzeugbewegungen um die Fahrzeuglängsachse, entkoppelt ist, eine weitgehend stellkraftfreie mechanische Verbindung her. Zudem leitet die Stelleinrichtung in einem zweiten Betriebsmodus bzw. in einem Verstellmodus, eine definierte Stellkraft oder ein definiertes Stellmoment zwischen dem Mittelteil und dem Rahmenabschnitt, zur Verschwenkung des Ausbringgestänges relativ zum Rahmen, ein. Dies geschieht weitgehend unabhängig von Störmomenten, die aus Fahrzeugbewegungen resultieren.

Zwar lässt sich mit dem oben beschriebenen System eine weitgehend parallele Führung des Spritzgestänges zu einer Bodenoberfläche realisieren. Allerdings ist damit kein Verfahren offenbart, das eine Anpassung von bspw. nur einer Seite oder einem Ausleger des Spritzgestänges ermöglicht.

Weiterhin wird in der EP 2 186 405 A1 ein Spritzgestänge und ein Verfahren zu dessen Steuerung beschrieben, mittels dessen eine Anpassung des Spritzgestänges an ein Bodenrelief oder eine Bodenkontur nahezu ermöglicht werden soll. Das Spritzgestänge verfügt über mindestens zwei über Gelenke an einem Mittelteil angeordnete Ausleger, wobei diese Ausleger wiederum über horizontale Achsen schwenkbar zueinander angeordnet sind und die Ausleger mittels Gelenken verbunden sind, und eine Stellbewegung der Ausleger zueinander aktiv steuerbar ist. Die Stellbewegung wird mittels eines Stellgliedes ausgeführt, wobei dieses wiederum als hydraulisch arbeitender Zylinder ausgebildet sein kann.

Bei derartigen Spritzgestängen, bei denen die Ausleger mittels hydraulischer Zylinder um horizontale Achsen verschwenkt werden können, besteht das Problem, dass sich die Ausleger nicht immer symmetrisch zueinander bewegen. Werden etwa beide Ausleger verschwenkt, bewegen sich diese aufgrund der ungleichmäßigen Bewegungen der den jeweiligen Auslegern zugeordneten Zylinder nicht gleichmäßig zueinander, was wiederum ein Drehmoment auf die Gestängeaufhängung hervorruft, welches gedämpft werden muss und ebenso die Verteilung der Spritzflüssigkeit negativ beeinflusst. Zwar sind hierfür diverse Lösungsansätze bekannt, bspw. die Ansteuerung der Zylinder mittels Stromteilerventile, doch sind auch diese diversen Bauartbedingen Ungenauigkeiten unterworfen, wodurch wiederum nicht sichergestellt werden kann, dass sich die Ausleger symmetrisch zueinander bewegen.

Darüber hinaus offenbart die FR 2 965 454 A1 ein Spritzgestänge mit zwei schwenkbeweglichen Auslegerarmen, deren Positionen erfasst werden. Die Auslegerarme werden in einer Weise positionsgesteuert geführt, indem die relativen Positionen der schwenkbeweglichen Auslegerarme zur Bodenfläche jeweils erfasst werden und in Abhängigkeit der jeweils erfassten relativen Positionen im Rahmen einer autonomen Regelung eine Neuausrichtung der wenigstens zwei Auslegerarme über eine jeweilige Schwenkbewegung zur Bodenfläche erfolgt. Ein weiterer Regelparameter kann der Ausrichtung überlagert werden, so dass einer der Arme wahlweise stärker verschwenkt werden kann als durch die autonome Regelung vorgegeben. FR 2 965 454 A1 offenbart die Merkmale des Oberbegriffs des Anspruchs 1.

Schließlich offenbart die FR 2 690 811 A1 eine Spritzgestängesteuerung, bei der zwischen einer automatischen Regelung und einer manuell überlagerbaren Positionssteuerung gewechselt werden kann, wobei die manuell eingestellte Position zunächst über eine definierbare Zeit beibehalten wird, bis die automatische Regelung wieder greift.

Ein vorrangiges Ziel der vorliegenden Erfindung besteht darin, ein verbessertes Steuerungsverfahren für eine Verteilvorrichtung bzw. ein Spritzgestänge zum Ausbringen von festen und oder flüssigen Stoffen zur Verfügung zu stellen, bei dem nicht nur das Verschwenken um horizontale Schwenkachsen von wenigstens zwei seitlichen Auslegern annähernd symmetrisch zu einem Mittelteil erfolgt, so dass das Spritzgestänge in seiner Bewegungssteuerung an eine Bodenkontur angepasst werden kann, sondern mit dem darüber hinaus auch eine unregelmäßige und manuell beeinflussbare Steuerung ermöglicht ist, um bspw. schwer sensierbaren Hindernissen an einer Seite des Gestänges ausweichen zu können.

Dieses Ziel wird durch ein Verfahren zur Bewegungssteuerung einer Verteilvorrichtung bzw. eines Spritzgestänges erreicht, das die Merkmale des Anspruchs 1 umfasst. Merkmale vorteilhafter Weiterbildungen der Erfindung ergeben sich aus den abhängigen Ansprüchen. Infolge dieser Maßnahmen werden zwei, um horizontale Achsen schwenkbar gelagerte und mit einem Mittelteil verbundene seitliche Ausleger mit Mitteln und/oder Koppelelementen in einer Weise wirkverbunden, dass die Bewegung von wenigstens einem Ausleger mit Hilfe der Mittel symmetrisch auf einen gegenüberliegenden Ausleger übertragen werden, wodurch erreicht wird, dass die Ausleger annähernd symmetrisch zum Mittelteil verschwenkt werden. Zudem kann vorgesehen sein, dass die Verteilvorrichtung um einen zentralen Aufhängepunkt drehbar gelagert ist, und eine Anpassung an eine Bodenkontur von wenigstens einem Ausleger durch symmetrisches Verschwenken beider Ausleger und Drehen der Verteilvorrichtung um den Aufhängepunkt erfolgt.

Die Erfindung sieht ein Verfahren zum positionsgesteuerten Führen wenigstens zweier schwenkbeweglicher Auslegerarme einer landwirtschaftlichen Verteilmaschine über eine Bodenfläche vor, wobei eine relative Position der wenigstens zwei schwenkbeweglichen Auslegerarme zur Bodenfläche jeweils erfasst wird und in Abhängigkeit der jeweils erfassten relativen Position im Rahmen einer autonomen Regelung eine Neuausrichtung der wenigstens zwei Auslegerarme über eine jeweilige Schwenkbewegung zur Bodenfläche erfolgt. Das Verfahren sieht vor, dass der autonomen Regelung für mindestens einen der wenigstens zwei schwenkbeweglichen Auslegerarme ein weiterer, manuell vorgebbarer Regelparameter überlagerbar ist, der durch manuelle Vorgabe zumindest einen der wenigstens zwei schwenkbeweglichen Auslegerarme zumindest temporär anhebt oder stärker verschwenkt als durch die autonome Regelung vorgegeben. Das Verfahren sieht außerdem vor, dass die autonome Regelung für mindestens einen der wenigstens zwei schwenkbeweglichen Auslegerarme temporär unterbrochen wird, so dass eine gewünschte Positionierung des mindestens einen der wenigstens zwei schwenkbeweglichen Auslegerarme während der Unterbrechung bspw. manuell gesteuert erfolgen kann. Während der Unterbrechung der autonomen Regelung wird zudem eine Soll-Position für den mindestens einen der wenigstens zwei schwenkbeweglichen Auslegerarme zur Bodenfläche manuell gesteuert vorgegeben und nachfolgend über einen definierbaren Zeitabschnitt oder bis zur Unterbrechung der manuellen Vorgabe geregelt aufrechterhalten.

Hierbei kann der relative Abstand des mindestens einen der wenigstens zwei schwenkbeweglichen Auslegerarme bei eingenommener Soll-Position zur Bodenfläche vergrößert gegenüber seinem relativen Abstand zur Bodenfläche bei autonomer Regelung gewählt werden. Das Verfahren weist den besonderen Vorteil auf, dass keine zwingende mechanische Koppelung der beiden Auslegerarme erforderlich ist, sondern dass diese weitgehend autonom und unabhängig voneinander in ihrer jeweiligen Winkellage verstellt werden können, sofern dies zum Ausweichen von Hindernissen oder aus anderen Gründen im Einzelfall erforderlich ist. Eine Gewichtsübertragung oder Nutzung der Verstellmomente der jeweils anderen Ausleger ist vorgesehen und kann den Verstellvorgang erleichtern.

Eine alternative Variante des Verfahrens könnte vorsehen, dass der autonomen Regelung ein manuell vorgebbarer Regelparameter überlagert wird, der zunächst eine symmetrische Verschwenkung beider Auslegerarme um einen ungefähr gleichen Schwenkwinkel vorsieht, wobei gleichzeitig, zeitversetzt oder zeitlich nachgelagert eine gleichsinnige Verdrehung beider Auslegerarme um einen Drehwinkel erfolgt.

Außerdem kann das Verfahren vorsehen, dass unmittelbar nach der Unterbrechung oder unmittelbar nach dem definierbaren Zeitabschnitt die autonome Regelung der Neuausrichtung der Auslegerarme wieder aufgenommen wird. D.h., es handelt sich um eine Art bistabiles System, das durch einmaligen manuellen Eingriff aus seinem ansonsten automatischen Regelbetrieb in einen teilmanuellen Betrieb geht, der aber ohne weitere Eingriffe solange aufrechterhalten wird, bis der Benutzer wieder einen weiteren Befehl zur Rückkehr in den automatischen Regelmodus gibt.

Neben einem manuellen Eingriff wäre es auch denkbar, dass der Eingriff in den automatischen Regelbetrieb durch Angaben bzw. auf Basis von Werten von zusätzlichen Sensoren erfolgt.

Die relative Position der wenigstens zwei Auslegerarme zur Bodenfläche kann bspw. vermittels eines oder mehrerer den wenigstens zwei Auslegerarmen jeweils zugeordneten Distanzsensoren erfasst werden, wobei die autonome Regelung und/oder das Aufrechterhalten der manuell vorgegebenen Soll-Position unter Wirkverbindung mit den jeweils zugeordneten Distanzsensoren geregelt erfolgt.

Weiterhin umfasst die Erfindung eine Verteilvorrichtung zum Ausbringen von flüssigen und/oder festen Wirkstoffen wie Dünger, Spritzmittel o. dgl. Diese Verteilvorrichtung umfasst ein an einem selbstfahrenden oder gezogenen Fahrzeug angeordnetes, ungefähr parallel zu einer Fahrtrichtung um einen Aufhängepunkt schwenkbar gelagertes Ausbringgestänge mit einem Mittelteil und über horizontale Schwenkachsen schwenkbare seitliche Ausleger. Die Länge der Ausleger kann je nach Verwendungszweck variieren. Typischerweise können die Ausleger mit einer Länge von ca. 12 bis 18 Metern für jeden Ausleger ausgebildet sein, so dass sich unter Berücksichtigung des Mittelteils mit ca. 2 bis 3 Metern Breite eine gesamte Arbeitsbreite des Spritzgestänges von bis zu 40 Metern oder mehr ergeben kann. Die seitlichen Ausleger werden mittels vertikaler Achsen mit dem Mittelteil verbunden. Mit diesen vertikalen Achsen können die Ausleger verschwenkt werden, und zwar zwischen einer ersten Arbeitsposition, in der die Ausleger und das Mittelteil annähernd in einer Linie quer zur Fahrtrichtung stehen, und einer zweiten Transportposition, in der die Ausleger zum Mittelteil so geklappt werden, dass eine für eine Straßenfahrt erforderliche Transportbreite erreicht wird.

Wenn im vorliegenden Zusammenhang von Schwenkbarkeit der Ausleger oder dem Drehen der Verteilvorrichtung ungefähr parallel zur Fahrrichtung die Rede ist, so sind damit andere Bewegungsfreiheitsgrade der Verteilvorrichtung nicht ausgeschlossen. Die vorliegende Erfindung bezieht sich allerdings nur auf Bewegungen parallel zur Fahrtrichtung, bei der die quer zur Fahrrichtung beidseitig an einem Mittelteil auskragenden Ausleger Auf- und Abbewegungen machen, oder bei der die Verteilvorrichtung im Uhrzeigersinn und/oder im Gegenuhrzeigersinn gedreht wird.

An den Auslegern und am Mittelteil sind in der Regel Spritzdüsen zum Ausbringen des jeweiligen Wirkstoffes oder Spritzmittels angebracht. Die Ausgestaltung dieser Spritzdüsen kann im Rahmen der vorliegenden Erfindung hinsichtlich der gewünschten Ausbringmenge pro Zeit oder pro Fläche des zu verteilenden Spritzmittels erfolgen. Das Erscheinungsbild des Spritzstrahls kann unterschiedliche Formen, wie bspw. fächerartige oder kegelartige Ausgestaltungen aufweisen. Die Ausgestaltung der Verteilvorrichtung mit mehreren unterschiedlichen Düsen ist ebenfalls möglich. Auch kann die Anzahl der Spritzdüsen je Ausleger bzw. je Verteilvorrichtung je nach deren Verwendungszweck variieren.

Das Spritzgestänge ist erfindungsgemäß aus einem Mittelteil und wenigstens zwei seitlichen Auslegern gebildet. Die Verbindung erfolgt jeweils über Schwenkachsen oder Drehpunkte, welche anforderungsgerecht ausgestaltet werden müssen, um die durch das Gestänge auftretenden Kräfte aufnehmen zu können und zugleich noch eine ausreichende Flexibilität zu gewährleisten, damit das Spritzgestänge unter allen auftretenden Betriebsbedingungen vor Beschädigungen geschützt ist bzw. nicht beschädigt werden kann.

Um zusätzlich zum Schwenkvorgang der Ausleger oder des Spritzgestänges eine Höhenverstellbarkeit zu ermöglichen, ist zudem vorgesehen, ein Stützelement zwischen dem Maschinenrahmen der landwirtschaftlichen Verteilmaschine und dem Mittelteil des Spritzgestänges so auszuführen, dass dieses in deren Höhe verstellt werden kann. Um diesen Anforderungen gerecht zu werden, kann die Ausgestaltung des Stützelements bspw. durch parallel angeordnete Gestänge bzw. sog. Parallelogrammgestänge o. dgl. erfolgen. Auch zusätzliche vertikale Achsen wären vorstellbar, die so gestaltet sind, dass das Spritzgestänge über diese in deren Höhe verschiebbar wäre. An den Stützelementen wird das Mittelteil des Spritzgestänges vorzugsweise über einen Aufhängepunkt montiert. Vorzugsweise geschieht dies mittels einer Drehlagerung, über die sich das Spritzgestänge drehen bzw. verschwenken kann. Der Aufhängepunkt kann so gewählt sein, dass sich dieser im Schwerpunkt der Verteilvorrichtung befindet, wobei dieser in der Regel bei einer symmetrisch aufgebauten Verteilvorrichtung im Zentrum, also in der Mitte dieses parallel zur Fahrtrichtung befindet. Es wäre jedoch auch vorstellbar, den Aufhängepunkt außerhalb oder nicht im Schwerpunkt anzubringen.

Die Bewegungssteuerung der beiden Ausleger erfolgt mittels zumindest eines Stellgliedes, das zwischen den beiden Auslegern oder zwischen dem Mittelteil und einem der beiden Ausleger angebracht ist, vorzugsweise jedoch über wenigstens zwei separate Stellglieder, die im Interesse der manuell vorgebbaren Auslenkungssteuerung der Spritzgestängearme auch unabhängig voneinander ansteuerbar sind. Durch Positions- und/oder Längenänderungen des Stellglieds bzw. der Stellglieder werden die Ausleger um die horizontalen Schwenkachsen, in Bezug auf die Bodenkontur, nach oben oder unten verschwenkt. Die Stellglieder können jeweils durch einen Hydraulikzylinder oder einen Hydraulikmotor ausgebildet sein. Der Hydraulikmotor kann je nach erwünschten Eigenschaften unterschiedlich ausgestaltet sein. Beispielsweise können im Rahmen der Erfindung für den Hydraulikmotor Radialkolbenmotoren, Axialkolbenmotoren oder Zahnradpumpen ihre Verwendung finden. Auch sind nichthydraulische Ausgestaltungen des Stellgliedes vorstellbar. Allerdings sind auch andere Stelleinrichtungen denkbar, bspw. elektromotorisch betriebene Linearmotoren oder dgl.

Die Anordnung des Stellgliedes kann auf vielfältige Weise erfolgen. So sieht die Erfindung vor, dass das Stellglied zwischen den beiden Auslegern montiert wird und diese dadurch verbunden werden. Es wäre aber auch vorstellbar, das Stellglied bspw. so zu montieren dass dieses nur mit einem Ausleger unmittelbar verbunden wäre. Auch die für den vorliegenden Fall besonders sinnvolle Variante mit zwei separaten Stellgliedern kann so ausgestaltet sein, dass sich jedes dieser Stellglieder jeweils am Mittelteil abstützt und jeweils auf einen der Arme wirkt.

Bei der erfindungsgemäßen Verteilvorrichtung ist insbesondere vorgesehen, dass dabei wenigstens einem der Ausleger wenigstens ein Stellglied derartig zugeordnet ist, dass dieser Ausleger um die horizontale Schwenkachse gegenüber dem Mittelteil in Richtung zu einer Bodenkontur oder von dieser weg bewegt werden kann, und wobei der der Verteilvorrichtung Stell- und/oder Übertragungsmittel zur Anpassung einer Auslegerlage an die Bodenkontur durch Auslenken wenigstens eines der beiden Ausleger gegenüber dem Mittelteil zugeordnet sind. Gemäß einem ersten Aspekt der Erfindung sind die Stellmittel manuell durch einen Maschinenführer der Verteilmaschine aktivierbar. Auf diese Weise wird ein Spritzgestänge zur Verfügung gestellt, bei dem die Ausleger nicht nur symmetrisch und/oder automatisch verschwenkt werden können, sondern bei dem auch ein einseitiges Verschwenken möglich ist. Das Spritzgestänge kann wahlweise eine automatische Anpassung der jeweiligen Schwenklagen der beiden Ausleger vorsehen, oder auch eine manuelle Anpassung der jeweiligen Schwenklagen. Der Vorteil einer derartigen Regelung bzw. Steuerungsmöglichkeit besteht insbesondere darin, dass hiermit eine schnellere Regelung bzw. ein schnellerer Eingriff ermöglicht ist. So ist hierdurch die Möglichkeit geschaffen, während der Überfahrt und dem Ausbringen von Spritzmittel einzelnen Hindernissen auszuweichen, welche ggf. durch Sensoren nicht oder erst zu spät erkannt werden. Dies können bspw. Hindernisse in Form von Stangen oder spitzen Gegenständen o. dgl. sein, die ggf. durch die vorhandenen Sensoren nur schwer erfasst werden können, so dass mit Hilfe einer manuellen Eingriffssteuerung Kollisionen aller Art zuverlässig verhindert werden können. Ebenso ist es hierdurch möglich, Hindernissen auszuweichen, ohne gleichzeitig das komplette Spritzgestänge ausheben zu müssen, was sich natürlich wiederum negativ auf die Arbeitsqualität auswirken würde.

Bei einer Variante der erfindungsgemäßen Verteilvorrichtung können die Stell- und/oder Übertragungsmittel in einer Weise ausgestattet sein, dass eine durch einen der beiden Ausleger hervorgerufene Bewegung, in Bezug auf die Bodenkontur, annähernd symmetrisch auf den zweiten Ausleger übertragen wird. Zudem können die Übertragungen der Stellbewegungen durch manuellen Eingriff des Maschinenführers modifizierbar und/oder durch zusätzliche Auslenkungen überlagerbar sein.

Das mit der Erfindung vorgeschlagene Verfahren dient somit dem positionsgesteuerten Führen wenigstens zweier schwenkbeweglicher Auslegerarme einer landwirtschaftlichen Verteilmaschine über eine Bodenfläche, wobei eine relative Position der wenigstens zwei schwenkbeweglichen Auslegerarme zur Bodenfläche jeweils erfasst wird und in Abhängigkeit der jeweils erfassten relativen Position im Rahmen einer autonomen Regelung eine Neuausrichtung der wenigstens zwei Auslegerarme via eine jeweilige Schwenkbewegung zur Bodenfläche erfolgt. Das Verfahren sieht vor, dass die autonome Regelung für mindestens einen der wenigstens zwei schwenkbeweglichen Auslegerarme temporär unterbrochen wird, wobei eine Positionierung des mindestens einen der wenigstens zwei schwenkbeweglichen Auslegerarme während der Unterbrechung manuell gesteuert erfolgt. Es kann zudem vorgesehen sein, dass während der Unterbrechung der autonomen Regelung eine Soll-Position für den mindestens einen der wenigstens zwei schwenkbeweglichen Auslegerarme zur Bodenfläche manuell gesteuert vorgegeben und nachfolgend über einen bestimmten Zeitabschnitt geregelt aufrechterhalten wird.

Vorzugsweise wird der relative Abstand des mindestens einen der wenigstens zwei schwenkbeweglichen Auslegerarme bei eingenommener Soll-Position zur Bodenfläche vergrößert gegenüber seinem relativen Abstand zur Bodenfläche bei autonomer Regelung. Unmittelbar nach der Unterbrechung oder unmittelbar nach dem bestimmten Zeitabschnitt wird vorzugsweise die autonome Regelung der Neuausrichtung wieder aufgenommen. Als alternatives Regelungs- oder Steuerungsverfahren kann vorgesehen sein, dass während einer Unterbrechung mindestens einer der wenigstens zwei schwenkbeweglichen Auslegerarme manuell gesteuert wird und mindestens ein weiterer der wenigstens zwei schwenkbeweglichen Auslegerarme weiterhin autonom geregelt wird. Weiterhin kann es sinnvoll sein, dass eine jeweilige Unterbrechung der autonomen Regelung mit manueller Steuerung für die wenigstens zwei Auslegerarme unabhängig voneinander erfolgt.

Es kann zudem vorgesehen sein, dass die relative Position der wenigstens zwei Auslegerarme zur Bodenfläche vermittels eines oder mehrerer den wenigstens zwei Auslegerarmen jeweils zugeordneten Distanzsensoren erfasst wird und die autonome Regelung und/oder das Aufrechterhalten der manuell vorgegebenen Soll-Position unter Wirkverbindung mit den jeweils zugeordneten Distanzsensoren geregelt erfolgt.

Um eine symmetrische Bewegung der Ausleger zu erreichen, sind diese jeweils mit Mitteln bzw. mit Koppelementen wirkverbunden, so dass Schwenkbewegungen von wenigstens einem der Ausleger mit den Mitteln symmetrisch auf den gegenüberliegenden Ausleger übertragen werden. In einer nicht erfindungsgemäßen Ausführungsform werden die Mittel bzw. die Koppelelemente aus einer Schwenkhebel-Koppelstangen-Anordnung gebildet. So sieht die Offenbarung einen drehbar gelagerten Schwenkhebel vor, der mittig bzw. annähernd mittig drehbar zwischen den wenigstens zwei Auslegern angebracht wird. Der Schwenkhebel ist mit Gelenken versehen, an denen wiederum Koppelstangen angebracht werden können. So kann bspw. eine erste Koppelstange zwischen einem ersten Gelenk, welches sich vorne, in Bezug auf die Fahrtrichtung auf dem Schwenkhebel befindet und einem linken Ausleger angebracht werden. Außerdem kann eine zweite Koppelstange zwischen einem zweiten Gelenk, welches sich hinten, in Bezug auf die Fahrtrichtung auf dem Schwenkhebel befindet, und einem rechten Ausleger angebracht werden. Wahlweise wäre auch eine umgekehrte Anordnung möglich. Durch Positions- und/oder Längenänderungen des Stellglied und der daraus resultierenden Bewegung von zumindest einem der Ausleger erfolgt mittels der Koppelstange eine Übertragung dieser Bewegung über ein erstes oder zweites Gelenk auf den Schwenkhebel, wodurch dieser eine entsprechende Drehbewegung durchführt. Über das gegenüberliegende erste oder zweite Gelenk wird diese Drehbewegung durch die weitere Koppelstange auf den gegenüberliegenden Ausleger übertragen, wodurch die beiden Ausleger jeweils symmetrisch bzw. annähernd symmetrisch zueinander nach oben oder nach unten, in Bezug auf die Bodenoberfläche, verschwenkt werden.

Neben der beschriebenen Schwenkhebel-Koppelstangen-Anordnung wären auch noch diverse andere nicht erfindungsgemäße Koppelelemente oder -mittel vorstellbar. So wäre auch eine Koppelung mittels drehbaren Zahnrades und jeweils links und rechts dazu angebrachten Zahnstangen vorstellbar. Ebenso wären diverse andere mechanische Koppelelemente denkbar. Auch eine einteilige Gestaltung des Mittels wäre denkbar. Darüber hinaus könnten auch hydraulische Mittel Anwendung finden, vorzugsweise könnten bei einer derartigen Koppelung hydraulische Zylinder verwendet werden, die unter Verwendung eines Master-Slave-Prinzips gekoppelt sein können. Das heißt, dass deren Größe so konzipiert ist, dass durch Bewegung von wenigstens einem Ausleger zunächst Öl von einem Zylinder verdrängt wird und mittels dieser verdrängten Ölmenge ein weiterer Zylinder bewegt bzw. angesteuert wird. Auch elektronische Mittel könnten verwendet werden, welche bspw. durch Lagesensoren angesteuert werden.

Erfindungsgemäß ist eine elektrohydraulische Koppelung der Stellkomponenten vorgesehen. Eine derartige elektrohydraulische Koppelung vereint jeweils die Vorteile von rein elektrischen und rein hydraulischen Koppelungen. Bei der vorgeschlagenen Ausführungsform der elektrohydraulischen Koppelung können die z.B. auf elektronischem Wege erfassten Sensorsignale verarbeitet und zur Ansteuerung von hydraulischen Zylindern herangezogen bzw. genutzt werden. Insbesondere ist es denkbar, dass zwischen dem Mittelteil und zumindest einem der Ausleger ein Winkelpotentiometer angebracht ist, das jeweils dazu geeignet ist, die Winkelstellungen zwischen Mittelteil und Ausleger zu ermitteln. Auf Basis dieser Werte des Winkelpotentiometers könnte nun bspw. der Zylinder, der dem gegenüberliegenden Ausleger zugeordnet ist, angesteuert werden. Dies könnte insbesondere so lange erfolgen, bis ein auch zwischen diesem Ausleger und dem Mittelteil angeordnetes Winkelpotentiometer den gleichen Wert liefert wie das gegenüberliegende Winkelpotentiometer. Als Zylinder können hierbei insbesondere Gleichlaufzylinder Verwendung finden. Derartige Zylinder bieten den Vorteil einer schnellen Verstellbarkeit.

Generell kann die Koppelung auf verschiedenste Weise erfolgen, wobei diese jedoch stets so ausgeführt sein muss, dass eine nahezu spielfreie, symmetrische Übertragung der Schwenkbewegung von einem Ausleger auf einen gegenüberliegenden Ausleger gewährleistet werden kann. Erfindungsgemäß ist eine elektrohydraulische Koppelung der Stellkomponenten vorgesehen.

Neben der symmetrischen Bewegung der Ausleger wird durch die erfindungsgemäße Koppelung der Ausleger auch die Gewichtsverteilung wesentlich verbessert, d.h. durch die Verbindung der Ausleger werden Gewichtsdifferenzen und dadurch hervorgerufene Drehmomente jeweils gegenseitig übertragen bzw. teilweise gegenseitig aufgehoben, wodurch sich der Schwerpunkt des Spritzgestänges stets annähernd im Zentrum zwischen den zwei Auslegern befindet, was bedeutet, dass bei einer Anordnung des Aufhängepunktes im Schwerpunkt auf diesen oder auf die Gestängeführung wesentlich geringere Kräfte wirken.

Darüber hinaus wird mit der erfindungsgemäßen Koppelung der zwei seitlichen Ausleger erreicht, dass zum Verschwenken dieser um die horizontale Achse nur noch lediglich ein Stellglied erforderlich ist.

Die Anpassung des Spritzgestänge bzw. von wenigstens einem der zwei Ausleger an die Bodenkontur kann dadurch erfolgen, dass der Verteilvorrichtung bzw. der landwirtschaftlichen Verteilmaschine eine Istwerterfassung zugeordnet ist, welche zunächst die relativ Position der Verteilvorrichtung zu einer Bodenkontur oder Bodenoberfläche ermittelt. Die Istwerterfassung erfolgt hierbei bspw. mittels Ultraschallsensoren, welche an der dem Boden zugewandten Seite des Spritzgestänges angeordnet sind, um somit den aktuellen Abstand des Gestänges zur Bodenoberfläche zu ermitteln. Aber auch andere Arten von Sensoren wären denkbar. Ebenso könnte die Istwerterfassung auf Basis von GPS-Daten erfolgen. Die von der Istwerterfassung ermittelten Werte werden an eine Datenverarbeitungsvorrichtung oder an eine Rechnereinheit übertragen. Dies kann mittels einer Kabelverbindung oder auch kabellos erfolgen. Weichen die von der Istwerterfassung ermittelten Werte von einem vordefinierten Sollwert ab, so wird das Stellglied, zum Verschwenken der Ausleger von der Rechnereinheit angesteuert, bzw. es wird ein Signal ausgegeben, wodurch das Stellglied eine Positions- und/oder Längenänderung durchführt und somit eine Änderung der Relativposition der Ausleger durchführt, so dass sich beide Ausleger wiederum in Richtung zur Bodenoberfläche oder von dieser weg bewegen. Bei der Datenverarbeitungsvorrichtung bzw. der Rechnereinheit kann es sich prinzipiell um jede elektronische Vorrichtung handeln, die in der Lage ist, einen Soll-Ist-Wert-Vergleich durchzuführen und auf dessen Grundlage ein Signal oder einen Stellwert auszugeben. Bewährt haben sich hierfür computergestützte Systeme.

Bei dem erfindungsgemäßen Verfahren zur Bewegungssteuerung und/oder Regelung einer an einer landwirtschaftlichen Verteilmaschine angebrachten Verteilvorrichtung zum Ausbringen von flüssigen und/oder festen Wirkstoffen ist vorgesehen, dass das Verdrehen der Verteilvorrichtung in Abhängigkeit der von einer Istwerterfassung ermittelten Relativposition in Bezug auf eine Bodenkontur erfolgt und/oder dass das Verdrehen der Verteilvorrichtung bzw. das Heben oder Senken wenigstens eines der Ausleger durch manuellen Eingriff beeinflusst wird. Auf diese Weise kann je nach Ausstattung der Verteilvorrichtung und/oder deren Steuerung vorgesehen sein, dass der Maschinenführer das Heben oder Senken wenigstens eines der Auslegers manuell beeinflussen und/oder beschleunigen und/oder eine automatisch vorgebbare Bewegung modifizieren kann.

Die vorliegende Erfindung kann auch durch den Begriff des "künstlichen Horizontes" charakterisiert werden. Das bedeutet, dass das Spritzgestänge der Bewegung annähernd folgt, welche das Spritzfahrzeug über einen längeren Zeitraum durchführt. Kurzzeitige Schwankungen und Aufbaubewegungen des Fahrzeuges werden hierbei von der Gestängeregelung herausgerechnet bzw. ausgeglichen.

Bei einer aktiven Gestängeregelung während des Applikationsvorganges ist es dem Bediener möglich, einseitig, d.h. bei einer Seite des gesamten Gestängeauslegers, manuell die Regelung zu überlagern. Durch Tastendruck (Taste: heben/senken der jeweiligen Gestängeseite) kann bspw. einseitig die automatische Höhenregelung deaktiviert werden. Der Benutzer kann somit den deaktivierten Ausleger manuell mit einer oder dergleichen Taste in eine gewünschte Position steuern, z.B. über ein Hindernis hinweg. Der deaktivierte Ausleger wird dabei von der Regelung zu einer Art "künstlichem Horizont" geregelt bzw. gehalten. Dabei bezieht sich dieser "künstliche Horizont" langfristig zum Fahrzeug. Kurze Wankbewegungen werden nicht berücksichtigt; langfristigen Änderungen wie z.B. einem Seitenhang folgt der Horizont.

Ist die Gestängeregelung einseitig deaktiviert und der Bediener betätigt keine Taste, verbleibt die jeweilige Seite in ihrer aktuellen Position (in Bezug auf den "künstlichen Horizont"). Während des Eingreifens des Bedieners bzw. der einseitigen Deaktivierung regelt die zweite Auslegerseite fortlaufend im normalen Regelungsbetrieb weiter. Erst nach einem bewussten Betätigen einer bestimmten Taste oder nach einer eingestellten Verweilzeit kehrt die deaktivierte Auslegerseite in den Automatikbetrieb zurück. Es handelt sich somit um ein "bistabiles System", das durch jeweils einmalige Steuerbefehle in den einen oder anderen Modus gebracht werden kann.

Während bei bisher bekannten Systemen zwar einseitige Regelungen möglich sind, wird die zweite Seite nicht in Bezug auf einen Referenzpunkt gehalten und ist nur so lange deaktiviert, solange durch den Benutzer eingegriffen wird. Dagegen bietet das erfindungsgemäße Gestänge und das erfindungsgemäße Verfahren die Möglichkeit für den Bediener von beidseitigen, automatisierten Auslegerregelungen, durch bestimmte Maschinenbedienungen oder -eingriffe in einen Betriebszustand einer "einseitig lagegeführten, nicht automatisierten Höhenregelung" zu gelangen, der durch manuelle Bedienbarkeit gekennzeichnet ist. Durch weitere Bedienung kann in den beidseitigen Regelbetrieb zurückgekehrt werden. Die nicht beeinflusste Auslegerseite verbleibt jeweils fortwährend im automatisierten Regelbetrieb.

Das erfindungsgemäße Verfahren eignet sich besonders für die Positionssteuerung und/oder Regelung der Auslegerarme einer Verteilvorrichtung zum Ausbringen von flüssigen und/oder festen Wirkstoffen wie Dünger, Spritzmittel o. dgl. Die Verteilvorrichtung kann insbesondere ein an einem selbstfahrenden oder gezogenen Fahrzeug angeordnetes, ungefähr parallel zu einer Fahrtrichtung um einen Aufhängepunkt schwenkbar gelagertes Ausbringgestänge mit einem Mittelteil und über horizontale Schwenkachsen schwenkbare seitliche Ausleger aufweisen. Die Länge der Ausleger kann je nach Verwendungszweck variieren. Typischerweise können die Ausleger mit einer Länge von ca. 12 bis 18 Metern für jeden Ausleger ausgebildet sein, so dass sich unter Berücksichtigung des Mittelteils mit ca. 2 bis 3 Metern Breite eine gesamte Arbeitsbreite des Spritzgestänges von bis zu 40 Metern oder mehr ergeben kann. Die seitlichen Ausleger werden mittels vertikaler Achsen mit dem Mittelteil verbunden. Mit diesen vertikalen Achsen können die Ausleger verschwenkt werden, und zwar zwischen einer ersten Arbeitsposition, in der die Ausleger und das Mittelteil annähernd in einer Linie quer zur Fahrtrichtung stehen, und einer zweiten Transportposition, in der die Ausleger zum Mittelteil so geklappt werden, dass eine für eine Straßenfahrt erforderliche Transportbreite erreicht wird.

Wenn im vorliegenden Zusammenhang von Schwenkbarkeit der Ausleger oder dem Drehen der Verteilvorrichtung ungefähr parallel zur Fahrrichtung die Rede ist, so sind damit andere Bewegungsfreiheitsgrade der Verteilvorrichtung nicht ausgeschlossen. Die vorliegende Erfindung bezieht sich allerdings nur auf Bewegungen parallel zur Fahrtrichtung, bei der die quer zur Fahrrichtung beidseitig an einem Mittelteil auskragenden Ausleger Auf- und Abbewegungen machen, oder bei der die Verteilvorrichtung im Uhrzeigersinn und/oder im Gegenuhrzeigersinn gedreht wird.

An den Auslegern und am Mittelteil sind in der Regel Spritzdüsen zum Ausbringen des jeweiligen Wirkstoffes oder Spritzmittels angebracht. Die Ausgestaltung dieser Spritzdüsen kann im Rahmen der vorliegenden Erfindung hinsichtlich der gewünschten Ausbringmenge pro Zeit oder pro Fläche des zu verteilenden Spritzmittels erfolgen. Das Erscheinungsbild des Spritzstrahls kann unterschiedliche Formen, wie bspw. fächerartige oder kegelartige Ausgestaltungen aufweisen. Die Ausgestaltung der Verteilvorrichtung mit mehreren unterschiedlichen Düsen ist ebenfalls möglich. Auch kann die Anzahl der Spritzdüsen je Ausleger bzw. je Verteilvorrichtung je nach deren Verwendungszweck variieren.

Das Spritzgestänge ist aus einem Mittelteil und wenigstens zwei seitlichen Auslegern gebildet. Die Verbindung erfolgt jeweils über Schwenkachsen oder Drehpunkte, welche anforderungsgerecht ausgestaltet werden müssen, um die durch das Gestänge auftretenden Kräfte aufnehmen zu können und zugleich noch eine ausreichende Flexibilität zu gewährleisten, damit das Spritzgestänge unter allen auftretenden Betriebsbedingungen vor Beschädigungen geschützt ist bzw. nicht beschädigt werden kann.

Um zusätzlich zum Schwenkvorgang der Ausleger oder des Spritzgestänges eine Höhenverstellbarkeit zu ermöglichen, ist zudem vorgesehen, ein Stützelement zwischen dem Maschinenrahmen der landwirtschaftlichen Verteilmaschine und dem Mittelteil des Spritzgestänges so auszuführen, dass dieses in deren Höhe verstellt werden kann. Um diesen Anforderungen gerecht zu werden, kann die Ausgestaltung des Stützelements bspw. durch parallel angeordnete Gestänge bzw. sog. Parallelogrammgestänge o. dgl. erfolgen. Auch zusätzliche vertikale Achsen wären vorstellbar, die so gestaltet sind, dass das Spritzgestänge über diese in deren Höhe verschiebbar wäre. An den Stützelementen wird das Mittelteil des Spritzgestänges über einen Aufhängepunkt montiert. Vorzugsweise geschieht dies mittels einer Drehlagerung, über die sich das Spritzgestänge drehen kann. Der Aufhängepunkt ist in der Regel so gewählt dass sich dieser im Schwerpunkt der Verteilvorrichtung befindet, wobei dieser in der Regel bei einer symmetrisch aufgebauten Verteilvorrichtung im Zentrum, also in der Mitte dieses parallel zur Fahrtrichtung befindet. Es wäre jedoch auch vorstellbar, den Aufhängepunkt außerhalb oder nicht im Schwerpunkt anzubringen.

Die Bewegungssteuerung der beiden Ausleger erfolgt mittels zumindest eines Stellgliedes, das zwischen den beiden Auslegern angebracht ist. Durch Positions- und/oder Längenänderungen des Stellglieds werden die Ausleger um die horizontalen Schwenkachsen, in Bezug auf die Bodenkontur, nach oben oder unten verschwenkt. Die Stellglieder können jeweils durch einen Hydraulikzylinder oder einen Hydraulikmotor ausgebildet sein. Der Hydraulikmotor kann je nach erwünschten Eigenschaften unterschiedlich ausgestaltet sein. Beispielsweise können im Rahmen der Erfindung für den Hydraulikmotor Radialkolbenmotoren, Axialkolbenmotoren oder Zahnradpumpen ihre Verwendung finden. Auch sind nichthydraulische Ausgestaltungen des Stellgliedes vorstellbar. Allerdings sind auch andere Stelleinrichtungen denkbar, bspw. elektromotorisch betriebene Linearmotoren oder dgl.

Die Anordnung des Stellgliedes kann auf vielfältige Weise erfolgen. So sieht die Erfindung vor, dass das Stellglied zwischen den beiden Auslegern montiert wird und diese dadurch verbunden werden. Es wäre aber auch vorstellbar, das Stellglied bspw. so zu montieren dass dieses nur mit einem Ausleger unmittelbar verbunden wäre.

Das erfindungsgemäße Verfahren dient dem positionsgesteuerten Führen wenigstens zweier schwenkbeweglicher Auslegerarme einer landwirtschaftlichen Verteilmaschine über eine Bodenfläche, wobei eine relative Position der wenigstens zwei schwenkbeweglichen Auslegerarme zur Bodenfläche jeweils erfasst wird und in Abhängigkeit der jeweils erfassten relativen Position im Rahmen einer autonomen Regelung eine Neuausrichtung der wenigstens zwei Auslegerarme über eine jeweilige Schwenkbewegung zur Bodenfläche erfolgt. Das Verfahren sieht vor, dass die autonome Regelung für mindestens einen der wenigstens zwei schwenkbeweglichen Auslegerarme temporär unterbrochen wird, wobei eine Positionierung des mindestens einen der wenigstens zwei schwenkbeweglichen Auslegerarme während der Unterbrechung manuell gesteuert erfolgt. Während der Unterbrechung der autonomen Regelung kann eine Soll-Position für den mindestens einen der wenigstens zwei schwenkbeweglichen Auslegerarme zur Bodenfläche manuell gesteuert vorgegeben und nachfolgend über einen bestimmten Zeitabschnitt geregelt aufrechterhalten werden, wodurch Hindernissen ausgewichen werden kann, die durch eine Sensorik nur schwer erfasst werden können. Der relative Abstand des mindestens einen der wenigstens zwei schwenkbeweglichen Auslegerarme kann bei eingenommener Soll-Position zur Bodenfläche vergrößert gegenüber seinem relativen Abstand zur Bodenfläche bei autonomer Regelung gewählt werden. Auch kann unmittelbar nach der Unterbrechung oder unmittelbar nach dem bestimmten Zeitabschnitt die autonome Regelung der Neuausrichtung der Auslegerarme wieder aufgenommen werden, so dass die bisherige selbsttätige Regelung weiterläuft.

Die relative Position der wenigstens zwei Auslegerarme zur Bodenfläche kann bspw. vermittels eines oder mehrerer den wenigstens zwei Auslegerarmen jeweils zugeordneten Distanzsensoren erfasst werden, so dass die autonome Regelung und/oder das Aufrechterhalten der manuell vorgegebenen Soll-Position unter Wirkverbindung mit den jeweils zugeordneten Distanzsensoren geregelt erfolgt. Während einer Unterbrechung kann mindestens einer der wenigstens zwei schwenkbeweglichen Auslegerarme manuell gesteuert werden, während mindestens ein weiterer der wenigstens zwei schwenkbeweglichen Auslegerarme weiterhin autonom geregelt werden kann. Eine jeweilige Unterbrechung der autonomen Regelung mit manueller Steuerung für die wenigstens zwei Auslegerarme kann ggf. unabhängig voneinander erfolgen.

Es sei noch erwähnt, dass die erfindungsgemäße Koppelung der Ausleger auch an einer Verteilvorrichtung Anwendung finden kann, welche nicht über einem Aufhängepunkt oder Schwerpunkt gedreht werden kann.

Im Folgenden sollen Ausführungsbeispiele die Erfindung und Ihre Vorteile anhand der beigefügten Figuren näher erläutern. Weitere Merkmale, Ziele und Vorteile der vorliegenden Erfindung gehen aus der nun folgenden detaillierten Beschreibung hervor, die als nicht einschränkendes Beispiel dient und auf die beigefügten Zeichnungen Bezug nimmt.
Fig. 1 zeigt eine schematische Perspektivansicht einer als selbstfahrende Feldspritze ausgeführten landwirtschaftlichen Verteilmaschine mit einer heckseitig angebauten Verteilvorrichtung bzw. einem Spritzgestänge.
Fig. 2 zeigt in zwei schematischen Detailansichten einen mittleren Bereich der Verteilvorrichtung, wie sie in Fig. 1 dargestellt ist.
Fig. 3 zeigt in zwei schematischen Heckansichten verschiedene Auslenkstellungen und Bodenkontur-Anpassungen eines an der landwirtschaftlichen Verteilmaschine angebauten Spritzgestänges.

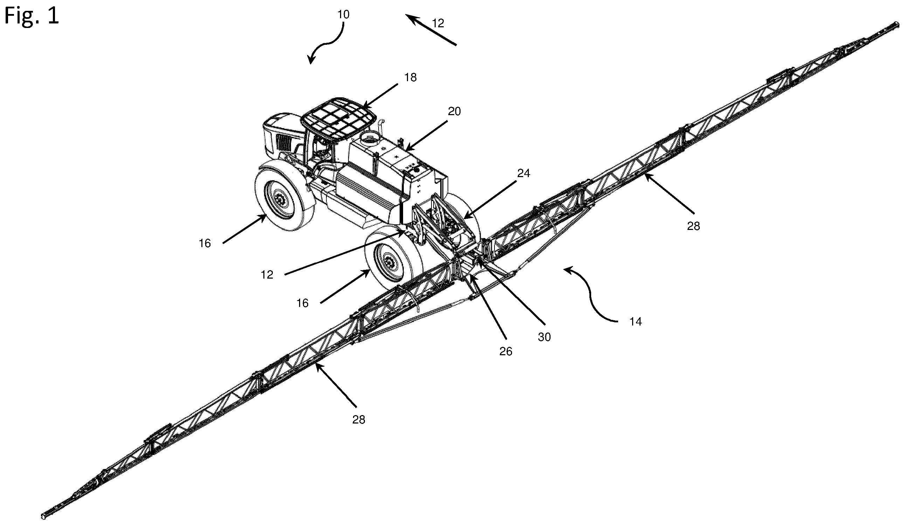

Gleiche oder gleich wirkende Elemente der Erfindung sind in den Figuren 1 bis 3 mit jeweils gleichen Bezugsziffern bezeichnet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße Verfahren ausgestaltet sein kann und stellen keine abschließende Begrenzung dar.

Die nachfolgend näher erläuterten Figuren 1 bis 3 verdeutlichen eine bevorzugte Ausführungsform einer Verteilvorrichtung bzw. eines Spritzgestänge, wie es typischerweise an Arbeitsmaschinen, Zugmaschinen oder anderen Trägerfahrzeugen angehängt oder aufgesattelt sein kann. Solche Trägerfahrzeuge können bspw. Spezialfahrzeuge sein, die einen Tank für den auszubringenden Wirkstoff sowie die erfindungsgemäße Verteilvorrichtung tragen können. Als Zugfahrzeug kommen jedoch gleichermaßen herkömmliche landwirtschaftliche Zugmaschinen bzw. Traktoren in Frage.

Die schematische Perspektivansicht der Fig. 1 zeigt eine als selbstfahrende Feldspritze 10 ausgestaltete landwirtschaftliche Verteilmaschine 10 mit einer heckseitig angebauten Verteilvorrichtung 14 bzw. einem sich quer zur Fahrtrichtung 12 ersteckenden Spritzgestänge 14 in Arbeitsposition. Die Verteilvorrichtung 14 dient zum Ausbringen von flüssigen und/oder festen Wirkstoffen wie bspw. Dünger oder Pflanzenschutzmitteln. Die Feldspritze 10 besteht im Wesentlichen aus zwei Fahrzeugachsen 16, einer Kabine 18 und aus einem Vorratsbehälter 20, wobei wiederum alle Komponenten mittels eines Maschinenrahmens 22 verbunden werden. Im hinteren Bereich der Feldspritze 10 ist über einen Stützabschnitt 24 das Spritzgestänge 14 mit dem Maschinenrahmen 22 verbunden. Ein derartiger Stützabschnitt 24 kann entweder ein fahrzeugfestes Rahmenelement sein, das bspw. durch einen Maschinenrahmen gebildet wird. In bevorzugter Weise ist der Stützabschnitt 24 jedoch höhenverstellbar gegenüber einem Maschinenrahmen angebracht, wobei im aufgeführten Beispiel der Stützabschnitt 24 als Viergelenkanordnung ausgeführt ist.

Das Spritzgestänge 14 umfasst ein Mittelteil 26 mit einem Aufhängepunkt 30, mit dem das Spritzgestänge 14 drehbar mit dem Stützabschnitt 24 verbunden wird, sowie beidseitig daran befestigte Ausleger 28, die wahlweise ein- oder mehrfach klappbar ausgebildet sein können, um bspw. in eine für eine Straßen- oder Transportfahrt geeignete Anordnung gebracht werden zu können. An den Auslegern 28 oder den Auslegearmen, sowie am Mittelteil 26 können bspw. eine Vielzahl von hier nicht dargestellten Spritzdüsen zum gleichmäßigen und/oder gesteuerten Ausbringen von flüssigem Spritzmittel oder anderem Ausbringgut angeordnet sein.

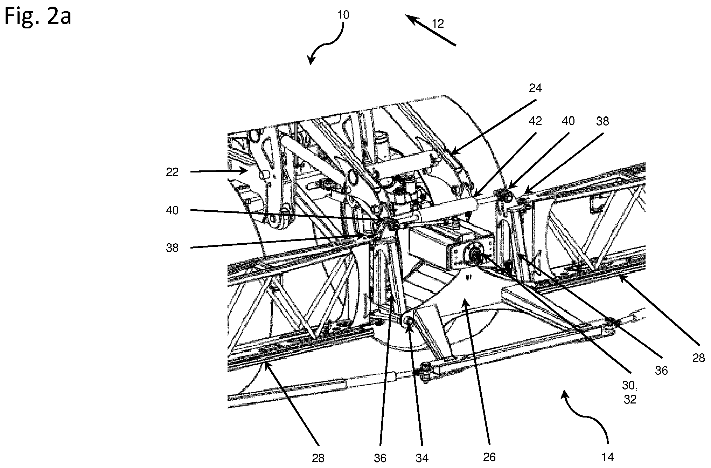

Die schematischen Detailansichten der Figuren 2a und 2b zeigen jeweils den mittleren Bereich einer Verteilvorrichtung 14, wobei wiederum die Fig. 2a dieses in einer schematischen Perspektivansicht und die Fig. 2b dieses in einer schematischen Draufsicht wiedergeben. Die Verteilvorrichtung 14 ist über einen Stützabschnitt 24 mit einem Maschinenrahmen 22 verbunden, wobei der Stützabschnitt 24 als höhenverstellbare Viergelenkanordnung ausgeführt ist. Das Mittelteil 26 des Spritzgestänges 14 ist mit einem Aufhängepunkt 30 versehen; im aufgeführten Beispiel ist dieser als Drehlagerung 30 gestaltet. Mittels dieses Aufhängepunktes wird das Mittelteil 26 bzw. das Spritzgestänge 14 drehbar mit dem Stützabschnitt 24 verbunden. Vorzugsweise ist die Drehlagerung 30 so angebracht, dass sich diese in etwa im Schwerpunkt des Spritzgestänges 14 befindet, wobei sich dieser in der Regel mittig vom Verteilergestänge 14 befindet. Es wäre jedoch auch denkbar, den Aufhängepunkt 30 außerhalb des Schwerpunkts zu platzieren. Beidseitig des Mittelteils 26 sind jeweils über horizontale Schwenkachsen 34 drehbar gelagerte Flanschböcke 36 angebracht. Zusätzlich sind die Flanschböcke 34 mit vertikalen Schwenkachsen 38 versehen, an denen jeweils seitliche Ausleger 28 montiert werden. Über die vertikalen Schwenkachsen 38 kann das Spritzgestänge 14 verschwenkt werden, und zwar zwischen einer ersten Arbeitsposition, in der die Ausleger 28 und das Mittelteil 26 annähernd in einer Linie quer zur Fahrtrichtung 12 stehen, und einer zweiten Transportposition, in der die Ausleger 28 zum Mittelteil 26 so verschwenkt werden, dass eine für eine Transportfahrt maximal zulässige Breite nicht überschritten wird. Dieses Verschwenken kann bspw. mittels Hydraulikzylinder erfolgen, aber auch andere Stellelemente wären vorstellbar. Es sei hierbei noch erwähnt, dass die horizontalen Schwenkachsen 34 sowie die vertikalen Schwenkachsen 38 jeweils so gestaltet sein müssen, dass diese die durch das Spritzgestänge 14 hervorgerufenen Belastungen bspw. durch Bewegungen der Feldspritze 10 aufnehmen und ggf. abdämpfen können. Eine derartige Gestaltung ist jedoch nicht Teil dieser Erfindung, weshalb hierauf nicht näher eingegangen wird.

Über die horizontalen Schwenkachsen 34 können die Ausleger 28 in Bezug auf das Mittelteil 26 bzw. die Feldspritze 10 in Richtung zu einer Bodenoberfläche oder von dieser weg bewegt werden. Wobei hierfür in einem oberen Bereich der beiden Flanschböcke 36 Gelenkpunkte 40 angebracht sind, mittels derer wenigstens ein Stellglied 42 montiert werden kann, und wodurch die beiden Flanschböcke 36 bzw. die beiden Ausleger 28 gemeinsam verbunden werden. Vorzugsweise wird das Stellglied 42, wie in den Figuren 2a und 2b dargestellt, so angebracht, dass die beiden Flanschböcke 36 über dieses verbunden werden. Es wäre jedoch auch vorstellbar, dass das Stellglied 42 so angebracht ist, dass dieses nur mit einem der Flanschböcke 36 verbunden wird. Vorzugsweise wird das Stellglied 42 durch einen Hydraulikzylinder oder einen Hydraulikmotor gebildet. Der Hydraulikmotor kann je nach erwünschten Eigenschaften unterschiedlich ausgestaltet sein. Beispielsweise können im Rahmen der Erfindung für den Hydraulikmotor Radialkolbenmotoren, Axialkolbenmotoren oder Zahnradpumpen ihre Verwendung finden. Auch wäre eine nichthydraulische Ausgestaltung, bspw. elektromotorisch betriebene Linearmotoren, des Stellgliedes 42 vorstellbar. Im aufgeführten Beispiel erfolgt das Verschwenken der Ausleger in Abhängigkeit der Einbaulänge des Stellgliedes 42, d.h. wird das Stellglied 42 so bewegt, dass es deren Einbaulänge verringert, so wird zumindest einer der Ausleger 28 nach oben bzw. von der Bodenoberfläche weg bewegt. Wird die Einbaulänge vergrößert, wird zumindest ein Ausleger 28 nach unten, also in Richtung zur Bodenoberfläche bewegt.

Wie im aufgeführten Beispiel dargestellt, sieht die Verteilvorrichtung 14 als Verbindungselement zwischen dem Mittelteil 26 und den zwei Auslegern 28 einen zusätzlichen Flanschbock 36 vor, welcher zum einen mit horizontalen Schwenkachsen 34 und zum anderen mit vertikalen Schwenkachsen 38 versehen ist. Darüber hinaus weist dieser im oberen Bereich noch Gelenkpunkte 40 auf, an denen wiederum das Stellglied 42 montiert werden kann. Eine derartige Gestaltung ist jedoch im Rahmen der Erfindung nicht zwingend erforderlich; es wären auch andere Verbindungen zwischen den Auslegern 28 und dem Mittelteil 26 vorstellbar.

Um zum einen zu erreichen, dass die Bewegung der beiden seitlichen Ausleger 28 symmetrisch zueinander erfolgt, und zum anderen dass sich der Schwerpunkt der Verteilvorrichtung 14 annähernd in der Mitte des befindet, sind den Auslegern 28 bzw. den Flanschböcken 36 Mittel 44 zugeordnet, mittels derer die Ausleger wirkverbunden werden. Wobei diese Mittel bzw. Koppelelemente 44 im dargestellten Ausführungsbeispiel der Figuren aus einer nicht erfindungsgemäßen Schwenkhebel 46 - Koppelstangen 48 Anordnung zusammengesetzt sind.

Hierbei ist ein Schwenkhebel 46 mittig bzw. annähernd mittig zwischen den Flanschböcken 36 drehbar gelagert angebracht. Dem Schwenkhebel 46 sind ein, in Fahrtrichtung vorne gelegenes erstes Gelenk 52 und ein in Fahrtrichtung hinten gelegenes zweites Gelenk 54 zugeordnet. An diesen Gelenken 52, 54 wird jeweils eine Koppelstange 48 angebracht. Wobei eine erste Koppelstange 48 zwischen dem ersten Gelenk 52 und einem Gelenkpunkt 40 des rechten Flanschbock 36 und eine zweite Koppelstange 48 zwischen dem zweiten Gelenk 52 und einem Gelenkpunkt 40 des linken Flanschbock 36 montiert werden. Die Koppelstangen sind an deren Enden jeweils mit zusätzlichen Kugelgelenken 50 versehen, um ggf. axiale oder radiale Versatze ausgleichen zu können. Wird durch Längenänderung des Stellglied 42 zumindest einer der Ausleger 28 bewegt, wird diese Bewegung mittels der, diesem Ausleger 28 zugeordneten, Koppelstange 48 auf den Schwenkhebel 46 übertragen, wodurch dieser eine Drehbewegung, im Uhrzeigersinn oder entgegengesetzt zum Uhrzeigersinn ausführt. Durch diese Drehbewegung wird die Bewegungsrichtung umgekehrt und über die zweite Koppelstange 48, welche dem sich noch in Ruhelage befindlichen Ausleger 28 zugeordnet ist, wird die Bewegung auf den anderen Ausleger 28 bzw. Flanschbock 36 übertragen.

Durch eine derartige Koppelung der Ausleger 28 mit Koppelelementen 44 wird erreicht, dass annähernd jegliche Bewegung, die einer der Ausleger 28 in Richtung zu einer Bodenkontur und von einer Bodenkontur weg ausführt, jeweils symmetrisch auf den sich zunächst nicht bewegenden Ausleger 28 übertragen wird. Darüber hinaus wird durch die Koppelung erreicht, dass die Gewichtsverteilung des Spritzgestänges 14 und damit das auf die Drehlagerung 30 und den Stützabschnitt 24 wirkende Drehmoment stark verringert wird, dass sich Gewichtsdifferenzen zwischen den Auslegern 28 durch die Koppelung jeweils gegenseitig übertragen lassen.

Es sei noch erwähnt, dass die Ausgestaltung der Koppelelemente 44 als Schwenkhebel 46 - Koppelstangen 48 Anordnung nur ein Beispiel wiedergibt. Generell könnten die Koppelelemente 44 auch anders gestaltet werden. Erfindungsgemäß werden elektrohydraulisch betätigte Mittel 44 angewendet. Wichtig bei der Auswahl der Mittel 44 zur Koppelung ist lediglich, dass diese so ausgeführt sind, dass zum einen eine annähernd symmetrische Bewegung der Ausleger 28 zueinander gewährleistet ist und zum anderen, dass zum Verschwenken der zwei Ausleger 28 vorzugsweise nur noch ein Stellglied 42 erforderlich ist.

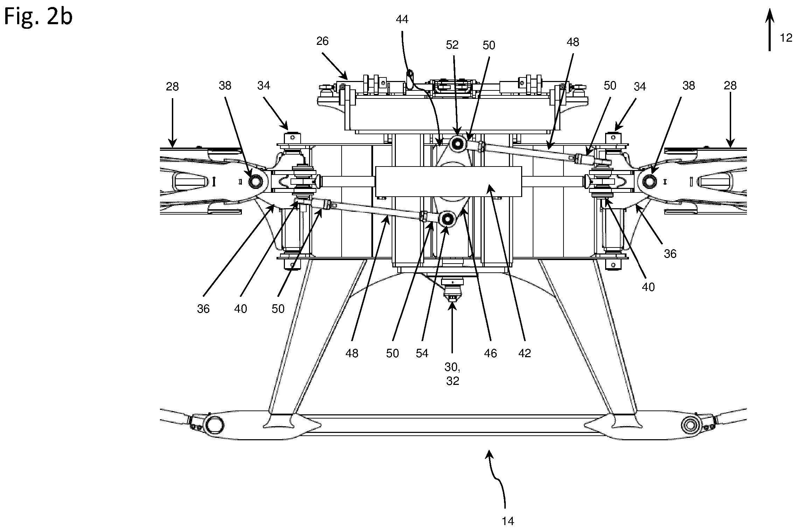

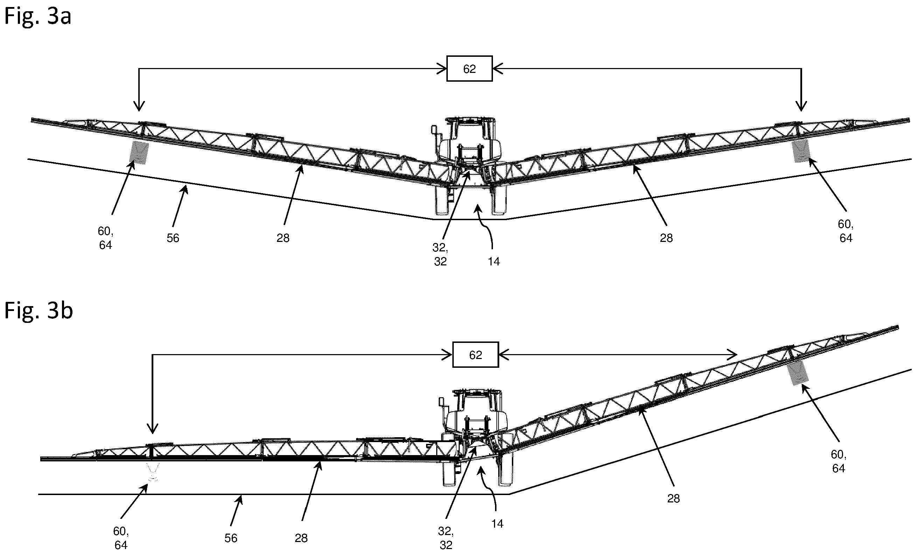

Die schematischen Darstellungen der Figuren 3 (Fig. 3a und Fig. 3b) verdeutlichen jeweils eine Heckansicht auf ein heckseitig an der Verteilmaschine 10 angebrachtes Spritzgestänge 14. Wobei in der Fig. 3a dieses zunächst symmetrisch verschwenkt und entlang einer Bodenkontur 56 geführt wird, und wobei in der Fig. 3b dieses nur auf der rechten Seite verschwenkt wird um entlang einer Bodenkontur 56 geführt zu werden.

So sind an den Auslegern 28 jeweils eine Istwerterfassung 60 in Form von Abstandssensoren 64 angebracht, welche den tatsächlichen Abstand des Spritzgestänges 14 bzw. der Ausleger 28 zu einer Bodenkontur erfasst. Die ermittelten Werte werden anschließend an eine Rechnereinheit 62 übermittelt und mit einem in der Rechnereinheit 62 hinterlegten Sollwert verglichen. Wobei die Übermittlung mittels Kabelverbindung aber auch kabellos erfolgen kann. Anhand der Differenz zwischen Sollwert und Istwert wird zunächst von der Rechnereinheit 62 ermittelt, ob und in welche Richtung bspw. die Ausleger 28 verschwenkt werden müssen. Liegt, wie in Fig. 3a dargestellt, eine Bodenkontur 56 vor, bei der beide Ausleger 28 symmetrisch zueinander verschwenkt werden müssen, wird das Stellglied 42 von der Rechnereinheit 62 angesteuert, und das Stellglied 42 führt eine Positions- bzw. Längenänderung durch, wodurch wiederum die beiden Ausleger 28 symmetrisch zueinander nach oben, also von der Bodenkontur weg bewegt werden. Dies geschieht solange, bis die von der Istwerterfassung 60 ermittelten Werte wieder den in der Rechnereinheit 62 hinterlegten Sollwerten entsprechen.

Liegt eine Bodenkontur 56 wie in Fig. 3b dargestellt vor, werden zunächst wiederum die zwei Ausleger 28 mit dem Stellglied 42 und den Koppelelementen 44 symmetrisch zueinander verschwenkt; zusätzlich wird das Spritzgestänge 14 über den Aufhängepunkt bzw. die Drehlagerung 30 gedreht. Die Drehung des Spritzgestänges 14 erfolgt wiederum in Abhängigkeit der von der Istwerterfassung 60 aktuell vorliegenden Position des Spritzgestänges 14. Die Drehung des Spritzgestänges 14 erfolgt wie in Fig. 3b dargestellt im Gegenuhrzeigersinn, wobei natürlich bei entsprechender Bodenkontur 56 auch eine Drehung im Uhrzeigersinn möglich wäre. Die Drehung des Spritzgestänges 14 erfolgt wiederum solange, bis die von der Istwerterfassung 60 ermittelten Positionsangaben wieder mit den in der Rechnereinheit 62 hinterlegten Sollwerten übereinstimmen.

Um das Spritzgestänge 14 drehen zu können, sind verschiedene Ansätze vorstellbar. So könnte bspw. die Drehlagerung 30 mit einem Drehantrieb 32 versehen werden. Dieser Drehantrieb 32 kann wiederum von der Rechnereinheit 62 angesteuert werden. Auch ein zusätzliches Stellelement, welches zum einen entfernt von Aufhängepunkt 30 mit dem Mittelteil 26 verbunden ist, und zum anderen über eine fahrzeugfeste Lagerung mit der Feldspritze 10 verbunden ist, typischerweise mit dem Maschinenrahmen 22 oder dem Stützabschnitt 24.

Nachfolgend sollen einige typische Regel- oder Steuereingriffe des Maschinenführers erläutert werden, die in bestimmten Betriebssituationen auftreten können. So können Fahrsituationen auftreten, bei denen die Maschine bspw. mit einem Ausleger (z.B. dem rechten Ausleger) ein Hindernis wie z.B. einen Pfosten, einen Brunnen o. dgl. passiert und ohne manuelle Steuereingriffe touchieren würde. Der Ausleger, der nicht auf ein Hindernis zufährt, wird weiterhin mit der automatischen Gestängeregelung in seiner Lage geregelt, wobei zunächst beide Ausleger parallel bzw. horizontal ausgerichtet sein können (vgl. Fig. 1). Bei einer Annäherung an das nicht von der Sensorik erfasste oder erfassbare Hindernis greift der Fahrer in die Gestängeregelung ein, indem er bspw. eine Taste betätigt. Damit wird der Automatikbetrieb für die rechte Seite temporär deaktiviert, so dass der Fahrer den Gestängeausleger so positionieren, d.h. anheben kann, dass er das Hindernis ohne Kollisionen passieren kann. Eine solche Situation ist z.B. in der schematischen Ansicht der Fig. 3b gezeigt. Der Fahrer beeinflusst hierbei die Rechnereinheit 62 durch manuellen Befehl, so dass sie für die Anhebung des rechten Auslegers 28 sorgt.

Falls der Fahrer diesen Zustand nun für eine bestimmte Zeit nicht ändern will, bleibt die Regelungsvorgabe für die weitere Fahrt aufrechterhalten. Bei keiner gegenteiligen oder weiteren Betätigung durch den Fahrer bleibt somit der jeweilige Gestängeausleger 28 (hier der rechte) in der zuletzt eingestellten angehobenen Position (vgl. Fig. 3b). Nach Passieren des durch den Fahrer als problematisch erkannten und eingeschätzten Hindernisses kann der Fahrer durch entsprechende Bedienvorgabe (z.B. Betätigung einer Taste) in den Automatikbetrieb zurückkehren, wodurch die Auslegerpositionen wieder durch die automatische Regelung definiert werden. Ein solcher automatischer Betrieb kann bspw. durch die Gestängelage entsprechend Fig. 3a ausgedrückt sein.

Anhand der Figuren 1 und 3b kann nochmals ein solcher einseitiger Schwenkvorgang verdeutlicht werden. Gemäß der Fig. 3b ist es dem Bediener möglich, einseitig (d.h. eine Seite des gesamten Gestängeauslegers 28) manuell die Regelung zu überlagern. Durch Tastendruck kann bspw. einseitig die automatische Höhenregelung deaktiviert werden. Der Benutzer kann somit den deaktivierten Ausleger manuell mit einer oder derselben Taste in eine gewünschte Position steuern, z.B. über ein Hindernis hinweg. Der deaktivierte Ausleger wird dabei von der Regelung zu einer Art "künstlichem Horizont" geregelt bzw. gehalten. Dabei bezieht sich dieser "künstliche Horizont" langfristig zum Fahrzeug. Kurze Wankbewegungen werden nicht berücksichtigt, langfristigen Änderungen wie z.B. einem Seitenhang folgt der Horizont.

Ist die Gestängeregelung einseitig deaktiviert (hier rechts in Fig. 3b) und der Bediener betätigt keine weitere Taste, verbleibt die jeweilige Seite in ihrer aktuellen Position. Während des Eingreifens des Bedieners bzw. der einseitigen Deaktivierung regelt die zweite Auslegerseite fortlaufend im normalen Regelungsbetrieb weiter. Erst nach einem bewussten Betätigen einer bestimmten Taste oder nach einer eingestellten Verweilzeit kehrt die deaktivierte Auslegerseite in den Automatikbetrieb zurück.

Es sei an dieser Stelle darauf hingewiesen, dass es sich je nach Ausgestaltung des Verfahrens um eine Überlagerung der ansonsten regulär ablaufenden Regelung handeln kann. So kann das Verfahren bei auftauchendem Hindernis und entsprechendem manuellen Steuerbefehl durch den Fahrer ein symmetrisches Anheben beider Auslegerarme 28 vorsehen, wonach eine Verschwenkung des gesamten Gestänges um die zentrale horizontale Drehachse erfolgen kann, so dass im Ergebnis dasselbe erreicht wird wie bei einer einseitigen manuell vorgegebenen Anhebung nur eines Arms 28.

Die Erfindung wurde unter Bezugnahme auf eine bevorzugte Ausführungsform beschrieben. Es ist jedoch für den Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 10: landwirtschaftliche Verteilmaschine, Feldspritze
- 12: Fahrtrichtung
- 14: Verteilvorrichtung, Spritzgestänge
- 16: Fahrzeugachse
- 18: Kabine
- 20: Vorratsbehälter
- 22: Maschinenrahmen
- 24: Stützabschnitt
- 26: Mittelteil
- 28: Ausleger
- 30: Drehlagerung, Aufhängepunkt
- 32: Drehantrieb
- 34: Horizontale Schwenkachse
- 36: Flanschbock
- 38: Vertikale Schwenkachse
- 40: Gelenkpunkt
- 42: Stellglied
- 44: Koppelelement, Mittel
- 46: Schwenkhebel
- 48: Koppelstange
- 50: Kugelgelenk
- 52: erstes Gelenk
- 54: zweites Gelenk
- 56: Bodenkontur
- 60: Istwerterfassung
- 62: Datenverarbeitungsvorrichtung, Rechnereinheit
- 64: Abstandsensor

## Patentansprüche

1. Verfahren zum positionsgesteuerten Führen wenigstens zweier schwenkbeweglicher Auslegerarme (28, 28-1, 28-2) einer landwirtschaftlichen Verteilmaschine (10) über eine Bodenfläche, wobei eine relative Position der wenigstens zwei schwenkbeweglichen Auslegerarme (28, 28-1, 28-2) zur Bodenfläche jeweils erfasst wird und in Abhängigkeit der jeweils erfassten relativen Position im Rahmen einer autonomen Regelung eine Neuausrichtung der wenigstens zwei Auslegerarme (28, 28-1, 28-2) und/oder der Verteilvorrichtung (14) über eine jeweilige Schwenkbewegung zur Bodenfläche erfolgt, wobei der autonomen Regelung für mindestens einen der wenigstens zwei schwenkbeweglichen Auslegerarme (28, 28-1, 28-2) ein weiterer, manuell vorgebbarer Regelparameter überlagerbar ist, der durch manuelle Vorgabe zumindest einen der wenigstens zwei schwenkbeweglichen Auslegerarme (28, 28-1, 28-2) zumindest temporär anhebt oder stärker verschwenkt als durch die autonome Regelung vorgegeben, wobei die autonome Regelung durch manuelle Vorgabe für mindestens einen der wenigstens zwei schwenkbeweglichen Auslegerarme (28, 28-1, 28-2) temporär unterbrochen wird, wobei eine Positionierung des mindestens einen der wenigstens zwei schwenkbeweglichen Auslegerarme (28, 28-1, 28-2) während der Unterbrechung manuell gesteuert erfolgt, und wobei während der Unterbrechung der autonomen Regelung eine Soll-Position für den mindestens einen der wenigstens zwei schwenkbeweglichen Auslegerarme (28, 28-1, 28-2) zur Bodenfläche manuell gesteuert vorgegeben und nachfolgend über einen definierbaren Zeitabschnitt oder bis zur Unterbrechung der manuellen Vorgabe geregelt aufrechterhalten wird, **dadurch gekennzeichnet, dass**
bei dem Verfahren das wenigstens eine Stellglied (42) mit beiden Auslegern (28-1 und 28-2) verbunden ist, wobei wenigstens einer der Ausleger (28-1 und/oder 28-2) aufgrund einer Positions- und/oder Längenänderung des Stellgliedes (42) um die horizontale Schwenkachse (34) verschwenkt wird,
wobei bei dem Verfahren den wenigstens zwei Auslegern (28-1 und 28-2) Mittel (44) derartig zugeordnet sind, dass eine Gewichtsübertragung von einem Ausleger (28-1 oder 28-2) auf den jeweiligen gegenüberliegenden Ausleger (28-2 bzw. 28-1) erfolgt, und
wobei bei dem Verfahren die Mittel (44) eine elektrohydraulische Koppelung der wenigstens zwei Ausleger (28-1 und 28-2) vorsehen.

2. Verfahren nach Anspruch 1 bei dem der autonomen Regelung ein manuell vorgebbarer Regelparameter überlagert wird, der zunächst eine symmetrische Verschwenkung beider Auslegerarme (28, 28-1, 28-2) um einen ungefähr gleichen Schwenkwinkel vorsieht, wobei gleichzeitig, zeitversetzt oder zeitlich nachgelagert eine gleichsinnige Verdrehung beider Auslegerarme (28, 28-1, 28-2) und/oder der Verteilvorrichtung (14) um einen Drehwinkel erfolgt.

3. Verfahren nach Anspruch 1 oder 2, bei dem der relative Abstand des mindestens einen der wenigstens zwei schwenkbeweglichen Auslegerarme (28, 28-1, 28-2) bei eingenommener Soll-Position zur Bodenfläche vergrößert gegenüber seinem relativen Abstand zur Bodenfläche bei autonomer Regelung gewählt wird.

4. Verfahren nach einem oder mehreren der Ansprüche 1 bis 3, bei dem unmittelbar nach der Unterbrechung oder unmittelbar nach dem definierbaren Zeitabschnitt die autonome Regelung der Neuausrichtung der Auslegerarme (28, 28-1, 28-2) und/oder der Verteilvorrichtung (14) wieder aufgenommen wird.

5. Verfahren nach einem oder mehreren der Ansprüche 1 bis 4, bei dem die relative Position der wenigstens zwei Auslegerarme (28, 28-1, 28-2) zur Bodenfläche vermittels eines oder mehrerer den wenigstens zwei Auslegerarmen (28, 28-1, 28-2) jeweils zugeordneten Distanzsensoren (64) erfasst wird und die autonome Regelung und/oder das Aufrechterhalten der manuell vorgegebenen Soll-Position unter Wirkverbindung mit den jeweils zugeordneten Distanzsensoren (64) geregelt erfolgt.

6. Verfahren nach einem oder mehreren der Ansprüche 1 bis 5, bei dem während einer Unterbrechung mindestens einer der wenigstens zwei schwenkbeweglichen Auslegerarme (28, 28-1, 28-2) manuell gesteuert wird und mindestens ein weiterer der wenigstens zwei schwenkbeweglichen Auslegerarme (28, 28-1, 28-2) weiterhin autonom geregelt wird.

7. Verfahren nach einem oder mehreren der Ansprüche 1 bis 6, bei dem eine jeweilige Unterbrechung der autonomen Regelung mit manueller Steuerung für die wenigstens zwei Auslegerarme (28, 28-1, 28-2) unabhängig voneinander erfolgt.

8. Verfahren nach einem der Ansprüche 1 bis 7, bei dem die von einer Istwerterfassung (60) ermittelten Werte an eine Datenverarbeitungsvorrichtung (62) übermittelt werden und mit in dieser hinterlegten Sollwerten verglichen werden und anhand der Differenz aus Ist- und Sollwert ein Verdrehen der Verteilvorrichtung (14) um den Aufhängepunkt (30) erfolgt.

9. Verfahren nach einem der Ansprüche 1 bis 8, bei dem das Verdrehen der Verteilvorrichtung (14) mittels eines zwischen der Verteilmaschine (10) und/oder dessen Stützabschnitt (24) oder dessen Maschinenrahmen (22) und dem Mittelteil (26) angeordneten Drehantriebes (32) oder durch lineare Stellbewegungen eines zwischen der Verteilmaschine (10) und/oder dessen Stützabschnitt (24) oder dessen Maschinenrahmen (22) und dem Mittelteil (26) angeordneten Linearantriebes durchgeführt wird.

10. Verfahren nach einem der Ansprüche 1 bis 9, bei dem wenigstens ein Stellglied (42) mit wenigstens einem der Ausleger (28-1 oder 28-2) verbunden ist, und dieser aufgrund einer Positions- und/oder Längenänderung des Stellgliedes (42) um die horizontale Schwenkachse (34) verschwenkt wird.

11. Verfahren nach einem der Ansprüche 1 bis 10, bei dem auf elektronischem Wege erfasste Sensorsignale verarbeitet und zur Ansteuerung von hydraulischen Zylindern als Stellglieder (42) herangezogen bzw. genutzt werden.

12. Verfahren nach einem der Ansprüche 1 bis 11, bei dem zwischen dem Mittelteil (26) und zumindest einem der Ausleger (28-1, 28-2) jeweils wenigstens ein Winkelpotentiometer zur Erfassung einer Winkelstellungen zwischen Mittelteil (26) und Ausleger (28-1, 28-2) angeordnet ist, wobei auf Basis dieser Werte des Winkelpotentiometers jeweils das Stellglied (42) angesteuert wird, das dem gegenüberliegenden Ausleger (28-2 bzw. 28-1) zugeordnet ist.

13. Verfahren nach einem der Ansprüche 1 bis 12, bei dem die Übertragungen der Stellbewegungen durch manuellen Eingriff des Maschinenführers modifizierbar und/oder durch zusätzliche Auslenkungen überlagerbar sind.

## Claims

1. Method for the position-controlled guidance of at least two pivotably movable cantilevered arms (28, 28-1, 28-2) of an agricultural distribution machine (10) over a ground surface, wherein a relative position of the at least two pivotably movable cantilevered arms (28, 28-1, 28-2) in relation to the ground surface is detected respectively, and, based on the detected relative position, a realignment of the at least two cantilevered arms (28, 28-1, 28-2) and/or of the distribution device (14) by means of a pivoting motion in relation to the ground surface is carried out through autonomous regulation, wherein the autonomous regulation for at least one of the at least two pivotably movable cantilevered arms (28, 28-1, 28-2) can be superimposed by an additional manually specifiable regulation parameter, the manually specifiable regulation parameter being provided by way of manual control and at least temporarily lifts or stronger pivots at least one of the at least two pivotably movable cantilevered arms (28, 28-1, 28-2) as given by the autonomous regulation, wherein the autonomous regulation is temporarily interrupted by way of manual control for at least one of the at least two pivotably movable cantilevered arms (28, 28-1, 28-2), wherein a positioning of the at least one of the at least two pivotably movable cantilevered arms (28, 28-1, 28-2) is carried out in a manually controlled manner during the interruption, and wherein a desired position for the at least one of the at least two pivotably movable cantilevered arms (28, 28-1, 28-2) in relation to the ground surface is specified in a manually controlled manner during the interruption and is subsequently maintained in a regulated manner over a definable time interval or until the interruption of the manual control, **characterized in that**,
in the method, the at least one actuator (42) is connected to both cantilevered arms (28-1 and 28-2), wherein at least one of the cantilevered arms (28-1 and/or 28-2) is pivoted about the horizontal pivoting axle (34) due to a position and/or length change of the actuator (42),
wherein, in the method, means (44) are assigned to the at least two cantilevered arms (28-1 and 28-2) in such a manner that a weight transfer is carried out from one cantilevered arm (28-1 or 28-2) onto the respective oppositely positioned cantilevered arm (28-2 respectively 28-1), and
wherein, in the method, the means (44) are configured to provide an electro-hydraulic coupling of the at least two cantilevered arms (28-1 and 28-2).

2. Method according to claim 1, in which the autonomous regulation is superimposed by the manually specifiable regulation parameter, which first provides a symmetrical pivoting of both cantilevered arms (28, 28-1, 28-2) by an approximately equal pivot angle, wherein, simultaneously, in a time-delayed manner, or subsequently, a like-direction rotation of both cantilevered arms (28, 28-1, 28-2) and/or the distribution device (14) by a rotation angle is carried out.

3. Method according to claim 1 or 2, in which the relative distance of the at least one of the at least two pivotably movable cantilevered arms (28, 28-1, 28-2) to the ground surface in the desired position is selected to be greater than its relative distance to the ground surface under autonomous regulation.

4. Method according to one or more of claims 1 to 3, in which the autonomous regulation of the realignment of the cantilevered arms (28, 28-1, 28-2) and/or the distribution device (14) is resumed immediately after the interruption or immediately after the definable time interval.

5. Method according to one or more of claims 1 to 4, in which the relative position of the at least two cantilevered arms (28, 28-1, 28-2) to the ground surface is detected by means of one or more distance sensors (64) respectively assigned to the at least two cantilevered arms (28, 28-1, 28-2), and the autonomous regulation and/or the maintaining of the manually specified desired position is carried out in a regulated manner under operative connection to the respectively assigned distance sensors (64).

6. Method according to one or more of claims 1 to 5, in which during an interruption at least one of the at least two pivotably movable cantilevered arms (28, 28-1, 28-2) is manually controlled, and at least one of the other of the at least two pivotably movable cantilevered arms (28, 28-1, 28-2) continues to be autonomously regulated.

7. Method according to one or more of claims 1 to 6, in which a respective interruption of the autonomous regulation with manual control for the at least two cantilevered arms (28, 28-1, 28-2) is carried out independently of one another.

8. Method according to one of claims 1 to 7, in which the values determined by an actual value detection (60) are transmitted to a data processing device (62) and compared with desired values stored therein, and a rotation of the distribution device (14) about the suspension point (30) is carried out based on the difference between actual and desired values.

9. Method according to one of claims 1 to 8, in which the rotation of the distribution device (14) is carried out by a rotary actuator (32) arranged between the distribution machine (10) and/or its support section (24) or its machine frame (22) and the middle part (26), or by linear actuation movements of a linear actuator arranged between the distribution machine (10) and/or its support section (24) or its machine frame (22) and the middle part (26).

10. Method according to one of claims 1 to 9, in which at least one actuator (42) is connected to at least one of the cantilevered arms (28-1 or 28-2), and the cantilevered arm (28-1 or 28-2) is pivoted about the horizontal pivoting axle (34) due to a change in position and/or length of the actuator (42).

11. Method according to one of claims 1 to 10, in which electronically detected sensor signals are processed and utilized and/or employed for the control of hydraulic cylinders as actuators (42).

12. Method according to one of claims 1 to 11, in which in each case at least one angle potentiometer is arranged between the middle part (26) and the cantilevered arms (28-1, 28-2), respectively, for detecting an angular position between the middle part (26) and the respective cantilevered arm (28-1 or 28-2), wherein the actuator (42) that is assigned to the respectively oppositely positioned cantilevered arm (28-2 respectively 28-1) is controlled on the basis of the values of the angle potentiometer in each case.

13. Method according to one of claims 1 to 12, in which the transmission of actuation movements is modifiable by manual intervention from the machine operator and/or may be superimposed by additional deflections.

## Revendications

1. Procédé pour guider avec commande de position au moins deux bras de flèche (28, 28-1, 28-2) mobiles par pivotement d'une machine de distribution (10) agricole au-dessus d'une surface au sol, dans lequel une position relative des aux moins deux bras de flèche (28, 28-1, 28-2) mobiles par pivotement par rapport à la surface au sol est respectivement détectée et, en fonction de la position relative respectivement détectée, une nouvelle orientation des au moins deux bras de flèche (28, 28-1, 28-2) et/ou du dispositif de distribution (14) est effectuée par l'intermédiaire d'un déplacement par pivotement respectif par rapport à la surface au sol dans le cadre d'une régulation autonome, dans lequel peut être superposé à la régulation autonome pour au moins un des au moins deux bras de flèche (28, 28-1, 28-2) mobiles par pivotement un autre paramètre de réglage pouvant être spécifié manuellement, qui soulève, par une spécification manuelle, au moins temporairement ou fait pivoter plus fortement par rapport à la spécification par la régulation autonome au moins un des au moins deux bras de flèche (28, 28-1, 28-2) mobiles par pivotement, dans lequel la régulation autonome est interrompue temporairement par une spécification manuelle pour au moins un des aux moins deux bras de flèche (28, 28-1, 28-2) mobiles par pivotement, dans lequel un positionnement de l'au moins un des au moins deux bras de flèche (28, 28-1, 28-2) mobiles par pivotement est effectué de manière commandée manuellement au cours de l'interruption, et dans lequel une position de consigne pour l'au moins un des au moins deux bras de flèche (28, 28-1, 28-2) mobiles par positionnement est spécifiée de manière commandée manuellement puis est maintenue de manière régulée sur un laps de temps pouvant être défini ou jusqu'à l'interruption de la spécification manuelle pendant l'interruption de la régulation autonome, **caractérisé en ce que**
selon le procédé l'au moins un organe de réglage (42) est relié aux deux flèches (28-1 et 28-2), dans lequel au moins une des flèches (28-1 et/ou 28-2) est pivotée autour de l'axe de pivotement horizontal (34) en raison d'une modification de position et/ou de longueur de l'organe de réglage (42),
dans lequel selon le procédé des moyens (44) sont associés aux au moins deux flèches (28-1 et 28-2) de telle manière qu'un transfert de poids est effectué depuis une flèche (28-1 ou 28-2) sur la flèche (28-2 ou 28-1) opposée respective et
dans lequel selon le procédé les moyens (44) prévoient un couplage électrohydraulique des au moins deux flèches (28-1 et 28-2).

2. Procédé selon la revendication 1, où est superposé à la régulation autonome un paramètre de régulation pouvant être spécifié manuellement, qui prévoit dans un premier temps un pivotement symétrique des deux bras de flèche (28, 28-1, 28-2) autour d'un angle de pivotement approximativement identique, dans lequel une rotation dans le même sens des deux bras de flèche (28, 28-1, 28-2) et/ou du dispositif de distribution (14) est effectuée autour d'un angle de rotation de manière simultanée, de manière décalée dans le temps ou ultérieurement.

3. Procédé selon la revendication 1 ou 2, où la distance relative de l'au moins un des au moins deux bras de flèche (28, 28-1, 28-2) mobiles par pivotement est choisie pour une position de consigne adoptée par rapport à la surface au sol de manière agrandie par rapport à sa distance relative par rapport à la surface au sol dans le cas de la régulation autonome.

4. Procédé selon l'une quelconque ou plusieurs des revendications 1 à 3, où la régulation autonome de la nouvelle orientation des bras de flèche (28, 28-1, 28-2) et/ou du dispositif de distribution (14) est reprise directement après l'interruption ou directement après le laps de temps pouvant être défini.

5. Procédé selon l'une quelconque ou plusieurs des revendications 1 à 4, où la position relative des au moins deux bras de flèche (28, 28-1, 28-2) par rapport à la surface au sol est détectée à l'aide d'un ou de plusieurs capteurs de distance (64) associés respectivement aux au moins deux bras de flèche (28, 28-1, 28-2) et la régulation autonome et/ou le maintien de la position de consigne spécifiée manuellement sont effectués de manière régulée moyennant la coopération avec les capteurs de distance (64) respectivement associés.

6. Procédé selon l'une quelconque ou plusieurs des revendications 1 à 5, où au moins un des au moins deux bras de flèche (28, 28-1, 28-2) mobiles par pivotement est commandé manuellement au cours d'une interruption et au moins un autre des au moins deux bras de flèche (28, 28-1, 28-2) mobiles par pivotement est régulé par ailleurs de manière autonome.

7. Procédé selon l'une quelconque ou plusieurs des revendications 1 à 6, où une interruption respective de la régulation autonome est effectuée avec une commande manuelle pour les au moins deux bras de flèche (28, 28-1, 28-2) indépendamment l'un de l'autre.

8. Procédé selon l'une quelconque des revendications 1 à 7, où les valeurs déterminées par une détection de valeur réelle (60) sont transmises à un dispositif de traitement de données (62) et sont comparées à des valeurs de consignes enregistrées dans celui-ci et une rotation du dispositif de distribution (14) autour du point de suspension (30) est effectuée à l'aide de la différence entre la valeur réelle et la valeur de consigne.

9. Procédé selon l'une quelconque des revendications 1 à 8, où la rotation du dispositif de distribution (14) est mise en œuvre au moyen d'un entraînement en rotation (32) disposé entre la machine de distribution (10) et/ou sa section d'appui (24) ou son cadre de machine (22) et la partie centrale (26) ou par des déplacements de réglage linéaires d'un entraînement linéaire disposé entre la machine de distribution (10) et/ou sa section d'appui (24) ou son cadre de machine (22) et la partie centrale (26).

10. Procédé selon l'une quelconque des revendications 1 à 9, où au moins un organe de réglage (42) est relié à au moins une des flèches (28-1 ou 28-2) et celui-ci est pivoté autour de l'axe de pivotement horizontal (34) en raison d'une modification de position et/ou de longueur de l'organe de réglage (42).

11. Procédé selon l'une quelconque des revendications 1 à 10, où des signaux de capteur détectés sur des voies électroniques sont traités et sont pris en compte ou utilisés pour piloter des cylindres hydrauliques en tant qu'organes de réglage (42).

12. Procédé selon l'une quelconque des revendications 1 à 11, où respectivement au moins un potentiomètre d'angle pour détecter des positions angulaires entre la partie centrale (26) et la flèche (28-1, 28-2) est disposé entre la partie centrale (26) et au moins une des flèches (28-1, 28-2), dans lequel est piloté sur la base desdites valeurs du potentiomètre d'angle respectivement l'organe de réglage (42), qui est associé à la flèche (28-2 ou 28-1) opposée.

13. Procédé selon l'une quelconque des revendications 1 à 12, où les transferts des déplacements de réglage peuvent être modifiés par une intervention manuelle du conducteur de machine et/ou peuvent être superposés par des déviations supplémentaires.
